# FASCICULE DE BREVET EUROPEEN

(11) **EP 0 444 160 B1**
(45) Date de publication et mention de la délivrance du brevet: **10.04.1996**
(21) Numéro de dépôt: 90909615.8
(22) Date de dépôt: 05.07.1990
(51) Int. Cl.: B23H 1/00, B23H 1/04

(54) **DISPOSITIF, EBAUCHES STANDARD ET ELECTRODES NORMALISEES POUR FRAISAGE ET ENFONCAGE PAR ELECTROEROSION**
VORRICHTUNG, STANDARDROHLINGE UND NORMALISIERTE ELEKTRODEN FÜR ELEKTROEROSIONSFRÄSER UND -SENKER
DEVICE, STANDARD BLANKS AND STANDARDIZED ELECTRODES FOR MILLING AND DYE SINKING BY ELECTROEROSION

(30) Priorité: 13.07.1989 CH 2622/89
(43) Date de publication de la demande: 04.09.1991
(73) Titulaire: CHARMILLES TECHNOLOGIES S.A., CH-1217 Meyrin 1 (CH)
(72) Inventeur: GIRARDIN, Roger, CH-1214 Genève (CH)
(86) Numéro de dépôt international: CH9000163
(87) Numéro de publication internationale: WO9100791

(56) Documents cités:
- GB-A- 2 138 596

## Description

L'invention a trait à un dispositif permettant d'usiner des électrodes-outil directement sur une machine d'enfonçage/fraisage EDM, puis de les utiliser pour un usinage EDM proprement dit tout en les laissant fixées à la tête d'usinage sur laquelle elles avaient été montées pour leur fabrication. Ce dispositif permet aussi de renouveler, en cours d'usinage, la partie active de l'électrode-outil dès qu'elle présente un certain degré d'usure.
On peut ainsi partir d'ébauches standards, c'est-à-dire disponibles dans le commerce, fabriquées en série sans grande précision dimentionnelle, en forme de volumes de révolution (à symétrie axiale par exemple), tels des tubes, cylindres ou billes. On peut même faire fabriquer en série des électrodes-outil de dimensions normalisées, et les utiliser avec le dispositif de la présente invention sur une fraiseuse EDM, en les rafraîchissant en cours d'usinage. Ces électrodes normalisées auront en général des formes simples, par exemple la forme de billes ou de cylindres, ou de cylindres terminés par une hémisphère, mais toute forme de révolution peut être envisagée. La présente invention a également trait à de telles ébauches standard ou électrodes normalisées, destinées à être utilisées avec le dispositif de la présente invention, ainsi qu'à l'utilisation de ce dispositif et de ces ébauches et électrodes sur une machine d'enfonçage/fraisage par électroérosion.

Traditionnellement, les électrodes-outil pour enfonçage EDM sont façonnées sur mesure pour chaque usage particulier. Toutefois on connaît déjà des dispositifs permettant de rafraîchir une électrode-outil sur la machine d'électroérosion elle-même.

Il s'agit surtout de rectifications réalisées par découpage EDM avec un fil-électrode, telle celle décrite dans la demande de brevet japonaise publiée sous le numéro 57-194828, selon laquelle les guides-fil et les organes d'alimentation en fil sont fixés sur le bac d'usinage; ils se déplacent donc solidairement avec la pièce à usiner, les guides-fil restant immobiles par rapport au bac. L'électrode d'enfonçage ne peut être découpée que selon un plan parallèle aux axes X et Y du dispositif déplaçant le bac (et la pièce à usiner ainsi que le fil à découper) relativement à l'outil. Le même type de rectification avec un fil-électrode est réalisé avec les dispositifs décrits dans les demandes japonaises publiées sous les numéros 61-159330, 61-159331, 61-159332 et 61-159333 et dans la demande de brevet européenne publiée sous le numéro 217 188 ou dans le brevet CH 659.605. Toutefois, ils permettent d'incliner le fil-électrode de manière à découper l'outil d'enfonçage selon un plan qui n'est pas parallèle au plan d'enfonçage XY. Ajoutons également le dispositif décrit dans la demande de brevet EP 295.206 dans lequel c'est l'outil à rectifier qui prend diverses inclinaisons et orientations, l'outil rectifieur restant fixe.

Citons également le brevet US 4.754.115 qui décrit une machine EDM munie de deux tables de travail mobiles, l'une pour enfonçage EDM, l'autre pour redresser une électrode de graphite mobile verticalement, soit par usinage USM (usinage aux ultra-sons), soit par usinage TFM (total form machining).

Si le coût et la complexité de la plupart de ces dispositifs se justifiait par le coût et les délais nécessaires à la réalisation (dessin et fabrication) des électrodes de forme utilisées en enfonçage, ce n'est plus le cas en fraisage EDM, où les électrodes ont des formes simples.
De plus, un rafraîchissement de l'électrode-outil en cours d'usinage devient indispensible en fraisage EDM, car cette technique s'accompagne d'une certaine usure de cet outil, le fraisage EDM étant en général conduit à grande vitesse, c'est-à-dire en réglant le régime d'usinage de façon à avoir un enlèvement de matière maximum. En effet, le coût des électrodes-outil de fraisage étant négligeable par rapport à celui des électrodes de forme pour enfonçage classique, il n'est plus économiquement intéressant d'usiner au régime dit "d'usure nulle" correspondant à une usure minimum de l'électrode-outil (et aussi à une érosion moins rapide de la pièce à usiner). Il était donc nécessaire de pallier cette usure rapide de l'électrode-outil.

La plupart de ces dispositifs connus permettent de rafraichir l'électrode-outil sur la machine EDM elle-même, sans avoir à la démonter de la tête d'usinage, grâce à un outil auxiliaire. La rectification de l'électrode-outil (en général de forme 3D compliquée et façonnée sur mesure pour chaque usage particulier) fait appel
- soit à un procédé EDM et elle est effectuée dans le bac d'usinage , l'outil auxiliaire étant un fil-électrode ( CH 659 605, JP 61-159 330, -1, -2, 3, citées ci-dessus) ou un calibre EDM ( JP 1-135 417); toutefois, le dispositif décrit dans EP 217 188 pour tourner par EDM de nombreuses électrodes standards avec un fil-électrode recommande d'utiliser un deuxième bac de travail;
- soit à un outil auxiliaire non EDM et un deuxième bac de travail est prévu pour cet outil auxiliaire (US 4 754 115).

L'originalité du présent dispositif réside dans le fait que, bien que l'outil auxiliaire ne soit pas une électrode EDM, mais une meule, un couteau, un foret, etc...., la rectification est effectuée dans le bac d' usinage EDM!. Il est donc simple et peut être retrofitté sur des machines existantes tout en permettant une rectification plus rapide que par EDM.

De plus, l'outil auxiliaire du dispositif de la présente invention est fixe en rotation; c'est l'électrode-outil ou son ébauche qui est animée d'un mouvement rotatif sur elle-même.

Le but de la présente invention était donc de trouver un dispositif permettant de rafraîchir ou de remplacer l'électrode-outil rapidement, si possible à faible coût, et surtout en respectant la précision, c'est-à-dire la conformité du profil de l'empreinte érodée avec celle du profil désiré, ce qui nécessitait des moyens pour repérer et positionner avec précision la surface active des électrodes par rapport aux coordonnées de référence de la machine EDM, ainsi qu'un dispositif pour les remplacer en cours d'usinage sans marquer la surface de la pièce usinée et sans diminuer sa précision. Il fallait en particulier trouver un agencement permettant :
- de fabriquer une électrode déjà "en situation", c'est-à-dire d'usiner une électrode-outil directement sur la machine EDM sur laquelle elle va être utilisée, sans avoir à la démonter de la broche de la machine et ceci quelque soit la forme désirée, et sans exiger un mécanisme ou un logiciel compliqué et coûteux, et
- de la déplacer vers la station d'usinage EDM où elle est utilisée pour fraiser ou enfoncer, toujours sans avoir été démontée de sa broche de fabrication et remontée sur une broche d'usinage.

Un autre but était d'utiliser les mêmes processus et dispositifs en cours d'usinage pour rectifier ou rafraîchir l'électrode.

Un troisième but était d'utiliser les mêmes processus et dispositifs pour fraiser avec des électrodes-outil normalisées, fabriquées en série, en les rafraîchissant et en les remplaçant, si nécessaire, automatiquement en cours d'usinage.

De plus, l'agencement de la présente invention devait être assez simple pour pouvoir être monté sur une machine EDM classique afin d'obtenir une électrode parfaitement centrée sur la tête d'usinage, de dimensions précises, à un prix de revient minimum.

Le dispositif, les ébauches standard et électrodes-outil normalisées et leur utilisation en enfonçage et en fraisage EDM, objets de la présente invention, sont définis aux revendications 1, 13 et 16.

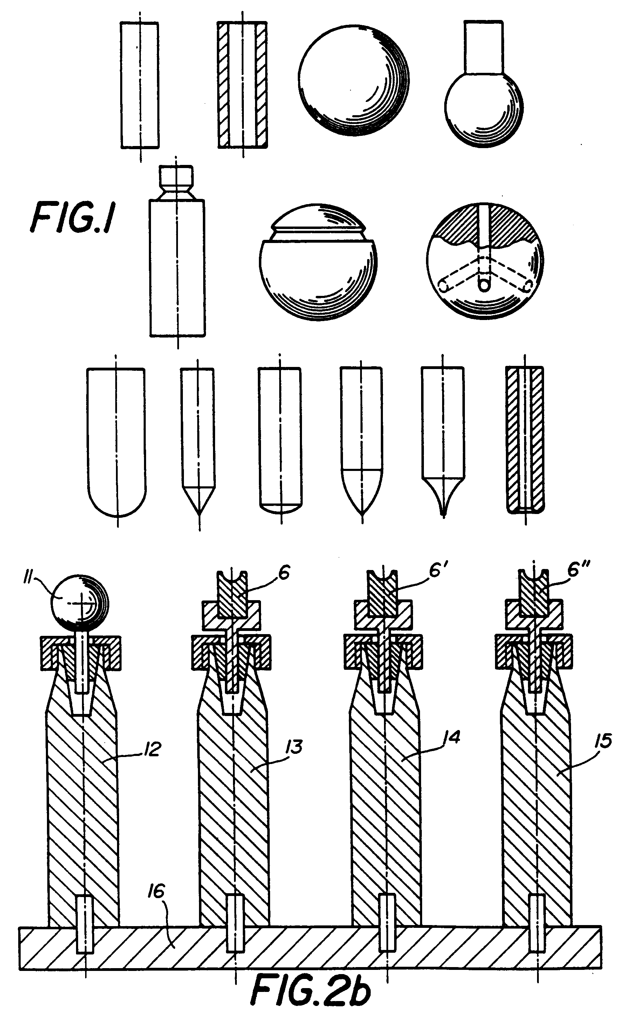

Comme mentionné ci-dessus, la pièce fixée sur le porte-outil du dispositif selon la présente invention est, soit une ébauche standard, soit une électrode de dimensions normalisées, fabriquée en série sur des machines-outils de type connu, telles des décolleteuses par exemple. La précision de ces fabrications en série peut atteindre 4 microns. Cette électrode sera en général de forme simple, sphérique, cylindrique ou tubulaire et réalisée avec des matériaux tels le graphite, le cuivre électrolytique ou le cuprotungstène, par exemple. Il s'agira d'un volume de révolution dont l'extrémité pourra être terminée par une section droite ou par une portion de sphère, un cône, un tronçon de cône, un volume engendré par la révolution d'une courbe quelconque (tels les exemples schématisés à la figure 1). On pourra y ménager soit lors de leur fabrication en série, réalisée par des moyens connus, soit grâce à l'outil-auxiliaire du dispositif selon la présente invention, des rainures, filetages ou empreintes diverses destinés à faciliter ou à permettre leur fixation sur le porte-outil du dispositif selon la présente invention, ainsi que des canalisations, rainures, cannelures destinées à l'amenée de liquide de refroidissement.

Le porte-outil pourra être muni d'un injecteur annulaire permettant de créer un film de liquide d'usinage autour de l'électrode-outil du type de celui décrit dans la demande de brevet WO 90/11159. Il est muni par exemple de griffes ou d'une pince du type dit "Schäublin" venant s'engager dans des évidements ou rainures ménagés sur l'ébauche ou l'électrode-outil. Ces derniers, de même que les canaux (destinés à la circulation de liquide de refroidissement) ménagés à l'intérieur ou à la surface de cette ébauche ou électrode-outil, peuvent avoir été réalisés par toute méthode connue avant le montage sur le porte-outil, ou être réalisées après ce montage par l'outil-auxiliaire.

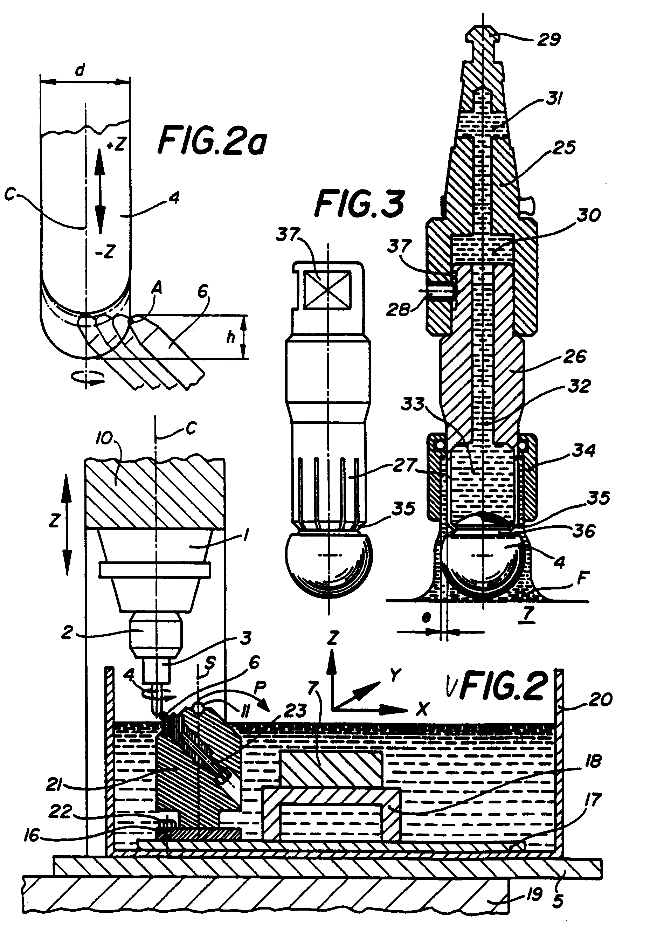

Le mode de fixation de l'électrode sur le porte-outil est de préférence agencé pour réaliser un autocentrage de l'ébauche ou de l'électrode-outil. De plus, il est avantageux de prévoir une fixation permettant le montage et démontage automatique de l'ébauche ou de l'électrode-outil. Enfin, le porte-outil comportera souvent un élément lui permettant de s'adapter à plusieurs dimensions d'ébauches ou d'électrodes-outil, comme par exemple le porte-outil décrit en regard de la figure 3.

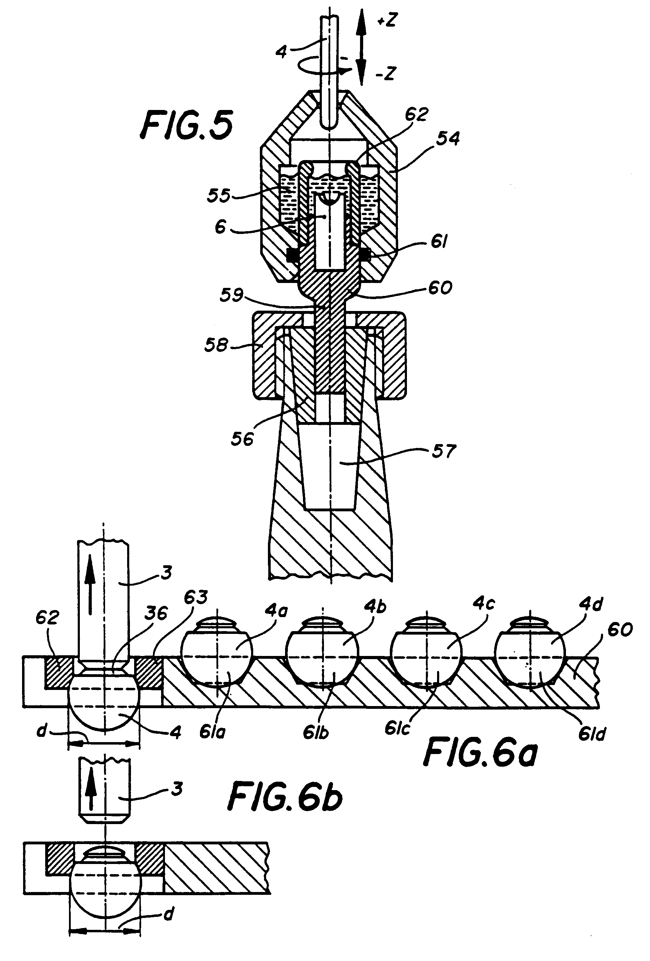

L'outil-auxiliaire est fixe en rotation, l'ébauche ou l'électrode-outil étant animée d'une mouvement vertical et d'une rotation sur elle-même; il s'agit en général d'une rotation à grande vitesse, de plusieurs milliers de tours/min. (Toutefois, comme l'outil est fixé sur la table de travail, il peut être animé des mouvements de cette dernière, par exemple de translations dans un plan horizontal). Il peut s'agir, par exemple, d'une meule, d'un burin, d'un foret, d'un ensemble d'un ou de plusieurs couteaux, d'un fil-électrode horizontal. Un mode de réalisation particulièrement avantageux est un outil exerçant une contrainte symétrique sur l'ébauche ou l'électrode-outil, par exemple comme le "couteau à profil constant" décrit en référence à la figure 5. Il est monté en général sur un socle fixé à proximité d'une paroi du bac de travail de la machine EDM.

Le magasin dans lequel sont stockées les ébauches ou les électrodes-outil est en général placé dans le bac de la machine EDM ou à proximité. Il est muni de préférence d'un distributeur ou d'un chargeur approprié, agencé pour présenter une ébauche ou une électrode-outil en l'orientant de manière à ce qu'elle soit saisie automatiquement par le porte-outil. Mais on pourrait aussi prévoir un organe disposé sur le porte-outil par exemple, capable d'orienter une ébauche ou une électrode-outil de manière à ce qu'elle puisse être saisie par le porte-outil. Cet organe peut être de tout type connu, tel un organe magnétique, par exemple, agissant sur un élément correspondant présent sur les ébauches ou les électrodes stockées dans le magasin.

Enfin, on prévoit un organe destiné à démonter, en général sans l'intervention d'un opérateur, les électrodes-outil trop usées pour être rectifiées. Il peut être situé au-dessus d'un réceptacle, mais il peut être avantageux de laisser simplement l'électrode usée tomber au fond du bac, où elle sera récupérée au moment du nettoyage. On peut aussi utiliser un dispositif agencé pour l' évacuer hors de la zone d'usinage. Ce dernier pourrait être monté, par exemple, sur la tête d'usinage ou sur un élément mobile indépendant et muni, par exemple, d'un aimant. Il peut être avantageux de prévoir un réceptacle à double fond basculant, tel que celui décrit à la figure 7 de la demande EP 267.151, mais fixé à la colonne ou au bâti de la machine. Il peut aussi s'agir d'un réceptacle fixé à l'une des paroi du bac, de forme appropriée pour protéger les organes situés dans le bac, tel un récipient de forme quelconque et de dimensions adaptées au nombre et aux dimensions des électrodes ou encore tel un filet, par exemple en grillage inoxydable, fixé sur les bords du bac. Ce réceptacle peut évacuer automatiquement du bac les chutes qu'il contient au bout d'un nombre prédéterminé d'éjections. Il peut également être de taille suffisante pour contenir toutes les chutes prévues pendant un cycle d'usinage et être alors avantageusement muni de moyens permettant d'égaliser la répartition des chutes.

Dans ce qui suit, l'invention est exposée plus en détail à l'aide du dessin annexé représentant seulement quelques uns des nombreux modes d'exécution possibles de la présente invention.
- La figure 1 illustre divers profils d'ébauches standards ou électrodes normalisées utilisées avec le dispositif de la présente invention;
- la figure 2 est une vue d'ensemble d'une machine de fraisage EDM sur laquelle est monté un dispositif selon la présente invention;
- la figure 3 montre l'un des modes d'exécution d'un porte-outil selon la présente invention agencé pour maintenir une électrode sphérique normalisée;
- la figure 4 représente un autre mode de réalisation d'un porte-outil selon la présente invention agencé pour maintenir une électrode longue et fine (diamètre de l'ordre du millimètre);
- la figure 5 schématise un mode d'exécution d'un outil auxiliaire agencé pour fabriquer et/ou rafraîchir une électrode cylindrique terminée par une hémisphère, un cône ou tout autre profil de révolution;
- les figures 6 et 7 illustrent deux variantes possibles de magasins appropriés à des électrodes sphériques normalisées et au porte-outil de la figure 3.

Rappelons que les machines d'enfonçage EDM classiques sont munies d'organes permettant un déplacement relatif entre la table de travail et l'outil selon trois axes orthogonaux X, Y et Z, ainsi qu'une rotation de l'outil autour de son axe. Lorsqu'elles comportent une broche tournante rapide capable d'entraîner un outil à des fréquences de rotation de l'ordre de plusieurs milliers de tours/minute, telle celle décrite dans la demande WO 90/11159, elles permettent de réaliser un fraisage EDM, c'est-à-dire d'usiner un grand volume, éventuellement de forme complexe, avec de petites électrodes, en général de formes simples. Certaines peuvent être munies d'une broche tournante capable de faire pivoter l'outil par rapport à la verticale. Ceci augmente les possibilités lors de la fabrication ou du rafraîchissement d'électrodes normalisées.

Les mouvements relatifs entre, d'une part, la tête d'usinage munie d'une broche tournante sur laquelle est monté le porte-outil du dispositif selon la présente invention et, d'autre part, l'outil auxiliaire ou la pièce à usiner par enfonçage/fraisage, ou encore le magasin à électrodes normalisées ou à ébauches standard, sont réalisés grâce aux organes et logiciels déjà présents sur la machine EDM. La commande numérique de cette dernière peut être reliée, en particulier, à un système CAO qui a permis de décrire la forme de l'empreinte à usiner par enfonçage/fraisage, ainsi qu'à un logiciel qui détermine les parcours que va réaliser l'électrode-outil.

Ainsi, comme illustré à la figure 2, l'axe Z d'une machine d'enfonçage classique permet de déplacer verticalement, avec précision, la tête d'usinage 1 munie d'une broche tournante 2 sur laquelle est fixé le porte-outil 3 portant l'ébauche ou l'électrode-outil 4. Ce mouvement est asservi aux progrès réalisés pour évider l'empreinte à usiner. La table 5 à mouvements croisés (selon les axes orthogonaux X et Y parallèles au plan de travail) permet d'amener, soit l'outil auxiliaire 6, soit la pièce à usiner 7, en regard de l'ébauche ou de l'électrode-outil 4. En effet, la colonne 10 comporte divers organes, non représentés, (servomécanisme actionné par la commande numérique, butée électronique, organe, tel celui décrit dans la demande de brevet EP368 394, interdisant à la tête de remonter au-delà d'une position dans laquelle l'électrode-outil ne serait plus immergée dans le liquide d'usinage, par exemple) pour contrôler avec précision la position verticale de la tête d'usinage 1.

La commande numérique, reliée aussi à deux servomoteurs actionnant la table 5 ainsi qu'à un générateur d'impulsions électriques, est bien connue de l'homme de métier, de même que le générateur, et ils ne sont donc ni représentés au dessin, ni décrits dans ce qui suit.
Cette commande peut comporter des circuits programmés de manière à enregistrer les coordonnées de la position de l'ébauche ou de l'électrode-outil 4.
Le bac de travail 20 est fixé sur la table 5 et se déplace solidairement avec celle-ci qui est supportée par le bâti 19. Ce bâti contient le réservoir de diélectrique constituant le liquide d'usinage, les filtres, pompes et autres éléments du circuit d'alimentation et d'évacuation de ce liquide diélectrique, tous bien connus dans l'état de la technique, et non-représentés.

Une table de travail 17 ainsi que des organes de fixation 18 pour la pièce 7 à usiner sont fixés au fond de ce bac 20. Ce dernier est équipé de divers électrovannes et manomètres de remplissage, d'injection, d'aspiration ou d'évacuation du diélectrique, de thermostats, de dispositifs permettant de régler le niveau de ce diélectrique, tous de type connu et dont aucun n'est représenté.
Un socle 16 est monté sur la table de travail 17; il peut comporter un seul ou plusieurs porte-outils (quatre, références 12 à 15, dans l'exemple illustré à la figure 2b), sur lequel (ou lesquels) sont montés au moins un outil auxiliaire 6; il présente également un support pour une sphère de référence 11 utilisée pour enregistrer par touche électrique la position exacte de l'ébauche ou de l'électrode-outil 4, et dont nous expliquerons le fonctionnement plus loin. Le porte-burin 21 schématisé en coupe à la figure 2 est fixé solidement au socle 16 par trois vis 22 (dont seule l'une est représentée).
L'outil auxiliaire 6 est un burin monté en oblique par rapport à l'axe de ce porte-burin 21 grâce à la vis 23. La sphère 11 n'est pas montée sur un porte-outil indépendant, comme montré à la figure 2b, mais directement sur le porte-burin 21.

Décrivons maintenant le fonctionnement du dispositif selon la présente invention, schématisé à la figure 2, depuis le moment où le porte-outil 3 vient de fixer une ébauche standard 4 cylindrique à partir de laquelle on désire façonner une extrémité hémisphérique. Nous supposerons que le diamètre de l'ébauche est le même que celui désiré pour l'électrode finale terminée en hémisphère. La commande numérique actionne certains mouvements de la tête 1 et de la table 5 selon les axes X, Y et Z, afin de centrer par touches électriques, de façon connue, l'axe C de l'ébauche 4 sur l'axe S du porte-burin 21 grâce à quatre contacts croisés réalisés entre la sphère de référence 11 et l'ébauche 4; puis elle commande une descente de l'ébauche 4 jusqu'à ce que celle-ci vienne efleurer cette sphère 11 par touche électrique au point de référence P, suivie d'un déplacement relatif selon les trois axes X, Y et Z destiné à amener la pointe du burin 6 au contact de l'ébauche en un point situé à la hauteur de l'extrémité de l'hémisphère désirée (point A, figure 2a) ou au-dessus de ce point, c'est-à-dire en un point situé à une distance de l'extrémité de l'ébauche au moins égale à h, la moitié du diamètre d de cette ébauche (voir figure 2a). Ceci est facile, car les coordonnées de la pointe du burin 6 sont préenregistrées dans la commande numérique, ainsi que celles du point de référence P. Il suffit ensuite de mettre en route la rotation de la broche 2 ainsi qu'un mouvement vers le haut de la tête 1 simultané à un mouvement relatif entre elle et la table 5 programmé afin que la pointe du burin 6 se déplace vers l'axe C de l'ébauche 4, en découpant cette dernière selon le profil désiré, qui est une hémisphère dans cet exemple. Il s'agit en général d'un mouvement selon l'un seulement des axes X et Y. En modifiant le programme, il serait possible de former l'extrémité de l'ébauche selon d'autres profils, tel un cône par exemple, mais toujours selon un profil ayant une symétrie de révolution par rapport à l'axe C de l'ébauche (qui sera celui de l'électrode-outil ainsi formée).
On procède d'une manière analogue lorsqu'il s'agit de rafraîchir une électrode-outil usée. A chaque rectification, l'électrode 4 est évidemment raccourcie d'une longueur Dx. Il faut que ceci soit pris en compte par la commande numérique afin que l'usinage puisse reprendre avec une électrode-outil dont la surface active occupe une position identique à celle qu'elle avait au moment de l'arrêt de l'usinage avant rafraîchissement, et qui a été mémorisée par la commande numérique.
Ceci est réalisé facilement : il suffit de ramener l'extrémité de l'électrode une fois rectifiée au contact de la sphère 11. La différence entre la cote verticale de la tête 1 avant et après rectification donne cette longueur Dx. La commande numérique est pourvue de programmes appropriés qui lui permettent de poursuivre l'usinage en décrémentant les coordonnées selon Z de la tête 1 de cette quantité Dx après chaque rafraîchissement de l'électrode. On pallie ainsi automatiquement le raccourcissement de l'électrode 4 dû à son usure.
La figure 3 représente l'un des modes de réalisation possibles pour un porte-outil 3 d'un dispositif selon la présente invention, destiné à retenir tout volume de révolution muni d'une rainure. Dans cet exemple, ce volume est une électrode normalisée 4 selon la présente invention en forme de sphère munie d'une rainure circulaire de profil approprié.
Ce porte-outil 3 est composé de deux éléments : un élément de fixation 25 et un corps 26 terminé par une pince 27 adaptée au maintien d'une pièce 4 de diamètre donné. Divers corps 26 comportant des pinces 27 de tailles variées peuvent être montés successivement dans le même élément 25 grâce à des vis 28 venant s'engager dans des évidements 37 appropriés ménagées dans ces corps 26.
Dans cet exemple, la fixation du porte-outil dans la broche tournante (non-représentée) est réalisée grâce à un système de verrouillage automatique comme celui décrit dans la demande de brevet WO 90/11159. L'élément de fixation 25 se termine par une partie saillante portant un épanouissement rectangulaire 29 dont les dimensions, prises dans un plan perpendiculaire à l'axe de symétrie du porte-outil sont légèrement inférieures aux dimensions d'une fente ménagée à l'extrémité d'un piston tirant, monté coaxialement dans la broche tournante et actionné vers le haut par un ressort. En imprimant un quart de tour au porte-outil, cette partie 29 est retenue par le fond du piston tirant. Le montage et le démontage entre le porte-outil 3 et la broche tournante peuvent être réalisés automatiquement. Par exemple, le verrouillage peut être obtenu en immobilisant le porte-outil dans un ratelier en regard de la fente ménagée dans le piston tirant. Il suffit d'abaisser la tête d'usinage selon l'axe Z et de commander une rotation de la broche d'un quart de tour ainsi qu'une remontée selon l'axe Z. Pour déverrouiller, on injecte un fluide (huile ou air comprimé, par exemple) sous pression qui repousse le piston tirant vers le bas; il suffit, en inversant les opérations ci-dessus, d'actionner le porte-outil d'un quart de tour pour le libérer de la broche. Mais d'autres systèmes de fixation peuvent être envisagés.
Le courant d'usinage se transmet jusqu'à l'électrode-outil 4 à travers la broche 2 et le porte-outil 3, d'où l'importance d'un refroidissement efficace pour l'ensemble broche/porte-outil (voir figure 3).

Un alésage cylindrique détermine dans l'élément 25 une chambre d'injection 30 alimentée depuis la broche tournante par des canaux radiaux 31 et communiquant par le canal central 32 avec une chambre 33 bornée par la pince 27. Celle-ci est percée de rainures radiales laissant le liquide sous pression s'écouler jusqu'à la surface interne de l'injecteur annulaire 34 puis le long de l'ébauche ou de l'électrode-outil 4.
L'injecteur 34 est profilé de manière à laisser un espace entre sa paroi en regard de la pince 27 et la surface de cette dernière. Cet espace est déterminé en fonction de la géométrie de l'appareillage, de la viscosité du liquide de refroidissement, et de sa pression d'injection, de façon à ce qu'un film de liquide F entoure l'ébauche ou l'électrode-outil 4.

Des corps 26 de diamètre et de profils différents peuvent être prévus afin de maintenir des pièces 4 de formes et de poids divers, tout en pouvant s'adapter dans le même élément 25.

Le montage de l'ébauche ou de l'électrode-outil 4 dans le corps 26 est réalisé très simplement, pour autant que la sphère 4 soit orientée avec sa rainure 36 disposée horizontalement : on centre la sphère 4 à saisir et le porte-outil, puis on amène les griffes 35 de la pince élastique 27 en contact avec la sphère 4. Une pression suffit à engager les griffes 35 dans la rainure 36.
Pour libérer la sphère 4, il suffit de la maintenir en l'engageant sous une sorte de fourche ou de ratelier plus étroit que son diamètre, et de remonter la tête d' usinage, ce qui "arrache" la pièce 4.
La rainure 36 est profilée de manière à être autocentrante : pour le montage de la sphère 4, il n'est pas indispensable de la centrer avec précision avec le porte-outil, ni d'orienter avec précision sa rainure dans un plan horizontal. lorsque le plan de cette rainure 36 est horizontal, l'un de ses bords est lui aussi horizontal, tandis que l'autre est oblique.

Selon une variante (non illustrée), une pièce faisant office de poussoir peut être introduite coaxialement dans le canal 32, afin de venir repousser la pièce 4 pour faciliter son démontage. Elle est actionnable par tout moyen (électrique, pneumatique, hydraulique, mécanique) connu, commandé numériquement de préférence. Elle peut être creuse et percée d'orifices dans sa partie inférieure afin de faire communiquer les chambres d'injection 30 et 33.

Selon une autre variante, le démontage de la pièce 4 (qu'elle soit sphérique, ou de forme différente) pourrait être facilité par une deuxième rainure ou une empreinte, ou un orifice, dans lesquels pourrait s'engager un organe destiné à l'immobiliser tandis que la tête d'usinage remonte afin de la désengager du porte-outil.

De nombreuses autres variantes que le système de fixation griffes-rainure du présent exemple sont envisageables : systèmes avec au moins trois empreintes et griffes obliques correspondantes, vis et écrou, aspiration de la pièce 4 par un canal relié à une pompe à vide, billes pénétrant dans une gorge et libérables par pression hydraulique ou pneumatique (fixation à billes et douilles de blocage), axe conique chassé dans une empreinte conique correspondante. Mais la solution illustrée à la figure 3 reste la moins coûteuse à ce jour.

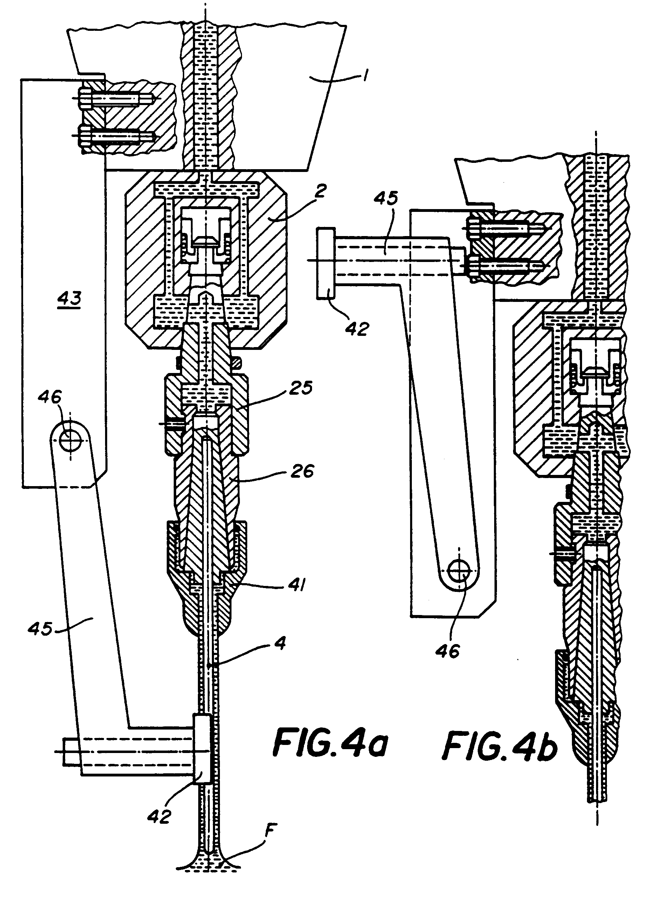

La figure 4 représente un autre type de porte-outil pour un dispositif selon la présente invention, agencé pour soutenir une pièce longue et fine, soit lors de sa fabrication s'il s'agit d'une ébauche, soit lors de son rafraîchissement dans le cas d'une électrode-outil.
Par "fines", on entend des pièces en forme de volume de révolution dont le diamètre est de l'ordre du millimètre.

Comme l'usinage par électroérosion ne soumet pas l'outil à de fortes contraintes, ce soutien n'est pas nécessaire au cours de l'usinage EDM. C'est pourquoi l'organe prévu pour le soutien lors de la fabrication et/ou du rafraîchissement de l'électrode est de préférence amovible.

Le porte-outil proprement dit est, par exemple, du type de celui décrit dans la demande de brevet WO 90/11159 où l'électrode 4 est maintenue par une pince 40 du type dit "Schäublin" engagée dans un alésage du porte-outil. Un injecteur annulaire 41 peut être prévu afin de former un film F de liquide de refroidissement autour de l'électrode 4, aussi bien lors de son tournage par l'outil auxiliaire que pendant l'usinage EDM proprement dit.
Le porte-outil peut être constitué comme décrit ci-dessus par un élément de fixation 25 fixé à la broche tournante, et dans lequel est maintenu son corps 26. De même, les autres éléments communs avec ceux du porte-outil illustré à la figure 3 portent les mêmes chiffres de références.
L'électrode 4 est une tige cylindrique de graphite, dont le diamètre est inférieur à 1 mm. Elle est soutenue par un appui 42 relié par un bras à la tête d'usinage 1 (à laquelle est également reliée la broche tournante 2). Ce bras comprend deux parties articulées 43 et 45. La partie 43 reste fixe, tandis que la partie 45 est rétractable (voir figure 4b) et peut effectuer un demi-tour autour du pivot 46.
Les positions de travail et de repos de cet appui 42 sont illustrées aux figures 4a et 4b. Cet appui est actionné par tout moyen connu, électrique, pneumatique ou hydraulique.

Selon certaines variantes, il est réglable en hauteur afin de s'adapter à différentes longueurs d'électrodes 4 (système différentiel connu et non illustré).

La figure 5 illustre l'un des modes de réalisation préférés de l'outil auxiliaire 6 pour le dispositif selon la présente invention. Il s'agit d'un couteau dit "à profil constant" dont le principe est bien connu de l'homme de métier. Contrairement au dispositif avec burin de la figure 2, il n'est plus nécessaire d'actionner horizontalement l'outil auxiliaire afin de rafraîchir l'extrémité de l'électrode selon un profil donné, tandis que ce mouvement est simultané au déplacement vertical de celle-ci et est programmé avec celui-ci par la commande numérique afin d'être coordonnés de manière à obtenir le profil désiré. Ici, il suffit d'actionner verticalement l'électrode en cours de fabrication ou de rafraîchissement, le profil des trois couteaux 50, 51 et 52 conduisant au profil désiré. Pour changer le profil, il faut changer l'outil auxiliaire.
L'outil 6 illustré comporte trois couteaux, mais il pourrait en présenter davantage. Un avantage de ces outils ayant au moins trois couteaux disposés symétriquement autour d'un axe (confondu avec l'axe de symétrie de la pièce à tourner), est que les contraintes sont réparties symétriquement autour de l'axe de rotation de l'ébauche ou de l'électrode-outil 4, alors qu'un outil unique, tel le burin de la figure 2, ne la sollicite que d'un seul côté. Elle reste donc parfaitement droite.
Cet outil 6 est monté dans une coupelle étanche 54 contenant une huile de coupe, (le liquide d'usinage EDM n'étant pas un bon liquide de coupe). Le brassage en est assuré par la rotation de la pièce 4. L'huile 55 permet d'éliminer les déchets. L'opérateur peut démonter par exemple cette coupelle 54 une fois par jour afin d'en renouveler l'huile.
La coupelle 54 est maintenue par la pince 56, elle-même enfoncée dans le cône 57 par l'écrou 58 de manière à enserrer la tige 59 du porte-outil 60, sur lequel est montée cette coupelle 54 grâce au joint 61.
Le porte-outil 60 est surmonté d'un anneau isolant 62 faisant office de guide afin de maintenir la pièce 4, en cas de vibrations par exemple. Elle est réalisée en matériau isolant (DELRIN ou céramique, par exemple), car sinon elle actionnerait la touche électrique lors du passage de la tête de l'électrode ou de l'ébauche 4 à sa hauteur, lors de l'avancée de celle-ci vers le couteau 6.
En effet, rappelons qu'un dispositif dit "touche électrique", bien connu de l'homme de métier et donc non représenté ici, est branché sur le couteau 6.
Lorsque la pièce 4 descend vers lui avec la tête d'usinage, le long de l'axe vertical Z, dès que la pointe de la pièce métallique 4 se rapproche à une distance limite donnée du couteau, (dans cet exemple à 3 microns) l'apparition d'un courant électrique dans un circuit calibré actionne l'arrêt du mouvement vertical, l'enregistrement de la cote de la pièce 4, le verrouillage de cette touche électrique, et l'enclenchement d'un programme contrôlant la rotation de la pièce 4 et sa descente selon l'axe Z à une vitesse et sur une distance données. Le calibrage de la touche électrique prend en compte de nombreux facteurs, entre autres le matériau du couteau, son état d'oxydation, l'humidité de l'air.

De nombreuses réalisations sont envisageables pour les magasins stockant les ébauches standards ou électrodes normalisées de la présente invention. Dans ce qui suit, seuls deux exemples relatifs aux pièces sphériques déjà illustrées en référence avec la figure 3 seront décrits.

La figure 6 illustre la première de ces variantes : un présentoir 60 est fixé par tout moyen connu (non représentés) à l'une des parois du bac 20 (voir figure 2), environ à la même hauteur que la table de bridage 18, et se déplace donc solidairement de la table à mouvements croisés 5. Il comporte quatre évidements tronconiques 61a à 61d de diamètres inférieurs à celui des sphères 4a à 4d devant être présentées. Les déplacements relatifs entre la table 5 et la tête d'usinage 1 permettent donc d'amener automatiquement le porte-outil 3 à proximité immédiate de ce présentoir 60, en regard de la sphère à saisir. Les positions, c'est-à-dire les coordonnées des axes de symétrie de ces évidements 61 et donc des sphères 4 qui les surmontent, sont mémorisées dans la commande numérique.
De plus, une station d'arrachage est prévue à l'extrémité du présentoir 60; elle consiste en une fourchette à deux dents horizontales 62 et 63 entre lesquelles peut passer le porte-outil 3, l'écartement des dents 62 et 63 étant légèrement supérieur au diamètre de son extrémité enserrant la sphère électrode 4, mais légèrement inférieur au diamètre de la sphère 4. Le fonctionnement de cette station est très simple : la hauteur de la tête d'usinage est réglée de manière que la rainure circulaire 36 de la sphère 4 soit disposée légèrement au-dessus de ces dents, le diamètre d de cette sphère étant disposé en-dessous (voir figure 6a). Il suffit d'actionner la tête selon une translation parallèle à ces dents puis de la faire remonter jusqu'à ce que la sphère 4 soit arrêtée par les dents 62 et 63, le porte-outil continuant sa remontée verticale, ce qui a pour effet de desserer les griffes 35 et de libérer la sphère 4 (figure 6b).

Selon certaines variantes, cette station peut évidemment être indépendante du présentoir 60 proprement dit.
Selon d'autres variantes, le présentoir 60 est mobile de façon à amener successivement chacun des évidements 61 en un point de référence prédéterminé. Ce point correspondra à une position fixe de la tête d'usinage à partir de laquelle elle sera actionnée vers le bas afin de faire saisir une nouvelle pièce 4 par le porte-outil.

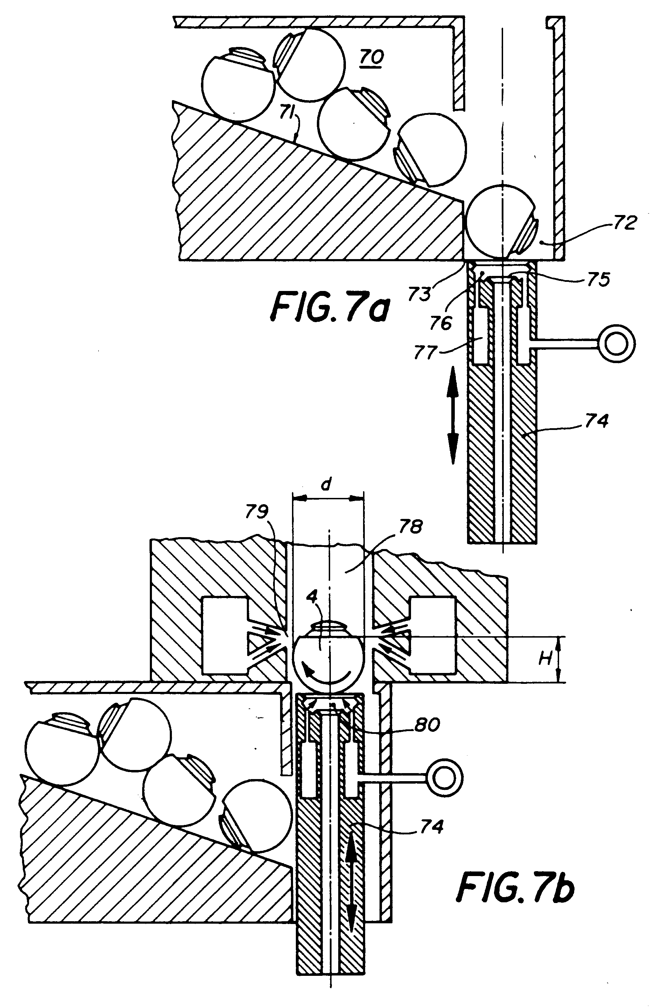

La figure 7 montre un deuxième type de magasin pour stocker des ébauches standard ou des électrodes normalisées pouvant être utilisées avantageusement sur les dispositifs de la présente invention. Il comporte une chambre 70 contenant des sphère 4 disposées en vrac, avec leur rainure 36 orientées aléatoirement. Le plan incliné 71 aboutit à une chambre 72 aux dimensions prévues pour ne pouvoir contenir qu'une seule sphère 4.
Grâce à cette configuration, il n'y aura toujours qu'une seule sphère positionnée au-dessus du tube 74, animé de mouvements alternatifs. En effet, le tube 74 est actionné entre les positions schématisées aux figures 7a et 7b, entraînant à l'aller une sphère 4 de la chambre 72 à la chambre 78. La sphère est maintenue en suspension au-dessus de l'entonnoir 75 terminant ce tube 74 grâce à un coussin d'air 80 créé par de l'air sous pression éjecté par l'orifice circulaire 76 relié à la chambre d'injection 77. Ce palier à air permet à la sphère d'être maintenue sans frottements.
La chambre 78 est percée d'orifices 79, situé à une hauteur H, légèrement inférieure à la distance séparant la rainure du point de la sphère 4 le plus éloigné de cette rainure, (ou d'un seul orifice circulaire dans l'une des variantes). De l'air sous pression est éjecté par ces orifices. Ceci a pour effet de "redresser" la sphère en amenant sa rainure 36 dans un plan horizontal. La position de la sphère 4 correspondant à la figure 7b est une position de référence, mémorisée par la commande numérique de la machine EDM. Celle-ci commande automatiquement le centrage de la tête d'usinage au-dessus de cette position, et son mouvement vertical vers le bas afin de venir engager les griffes du porte-outil dans la rainure de la sphère.

Les avantages apportés par la présente invention sont nombreux. Il est, en effet, plus simple et plus rapide de fabriquer, et/ou de rafraîchir une électrode-outil directement sur la machine sur laquelle elle va être utilisée. Ceci évite des montages et démontages et en plus du gain en temps et en simplicité, ceci permet une meilleure précision ou/et une plus grande automation puisque les positions de référence sont conservées et que l'excentricité consécutive à un démontage de l'outil de la broche de fabrication ou de rafraîchissement et à son remontage sur la tête d'usinage d'une machine EDM est ici évitée.
Il est surtout possible de normaliser la fabrication de ces électrodes jetables en partant de formes standardisées (et de faible coût) et en rafraîchissant ou en remplaçant à volonté, en cours d'usinage, une électrode usée. On peut partir d'ébauches très simples, en forme de volumes de révolution, y ménager éventuellement des rainures, des empreintes ou des canalisations afin de permettre leur refroidissement par le liquide d'usinage et/ou de faciliter leur montage sur le porte-outil, et éventuellement les tourner avant utilisation afin de leur donner le profil actif désiré. Ce dernier peut être enregistré dans la commande numérique, et créé ou régénéré à volonté et automatiquement sur des ébauches ou électrodes successives stockées dans un magasin, éventuellement muni d'un chargeur approprié. Le remplacement en cours d'usinage d'une électrode trop usée pour être rectifiée est automatique et rapide.
L'économie ainsi réalisée est vraiment importante et s'ajoute à celle déjà apportée par le gain de place et de matériel réalisé en utilisant les mêmes mécanismes de précision, la même commande numérique, et les mêmes logiciels pour l'usinage EDM et la fabrication et/ou le rafraîchissement des électrodes utilisées pour l'usinage. Il suffit d'ajouter un outil auxiliaire (et éventuellement un chargeur), actionnable(s) par la commande numérique de la machine, et de munir cette dernière des logiciels et circuits appropriés. On peut donc aussi équiper très facilement une machine existante avec ce dispositif. Ajoutons que le renouvellement automatique de la partie active usée de l'électrode permet d'usiner avec des électrodes beaucoup plus petites que le volume à éroder, et donc avec des électrodes beaucoup plus légères que les électrodes d'enfonçage classiques, d'où la possibilité de construire une machine de fraisage EDM avec une mécanique plus légère que celle utilisée pour les machines d'enfonçage classiques.

Grâce au dispositif de la présente invention, on peut donc fraiser une empreinte de n'importe quels dimensions et profil, (pour autant qu'elle puisse être décomposée en une combinaison de volumes simples), et ceci avec une précision qui peut même être supérieure à celle obtenue en enfonçage classique. Il est aujourd'hui possible de décrire une forme complexe en formes simples élémentaires grâce aux systèmes connus de CAO (Conception Assistée par Ordinateur). Le profil de ces volumes simples peut être transmis à la commande numérique de la machine EDM et mémorisé par elle, afin de rectifier ou même tourner les électrodes élémentaires correspondant à ces volumes simples. En travaillant ainsi de manière entièrement "autonome", la machine de fraisage EDM pourrait devenir véritablement une machine "intelligente".

## Revendications

1. Dispositif pour machine d'enfonçage et de fraisage EDM, destiné à tourner et/ou rafraîchir une électrode-outil (4) sans avoir à la déverrouiller de la tête d'usinage de la machine EDM et comportant
- un porte-électrode (3) monté sur la tête d'usinage (1) de la machine EDM et capable de maintenir cette électrode-outil ou son ébauche (4) aussi bien durant son tournage et/ou sa rectification que lors de l'usinage par électroérosion et
- un seul bac de travail (20) dans lequel sont montés la pièce à usiner (7) et un outil auxiliaire (6) agencé pour usiner une électrode-outil (4) ou/et rafraîchir avec précision son profil actif en forme de volume engendré par la révolution d'une courbe quelconque, caractérisé par
- le fait que la tête d'usinage (1) est mobile verticalement et porte une broche rotative (2) sur laquelle est fixé le porte-électrode (3), que
- l'outil auxiliaire (6) est réalisé sous forme d'un outil mécanique unique mobile dans un plan perpendiculaire à l'axe de rotation de la broche (2) ou d'un bloc à outils multiples disposés symétriquement autour de l'axe de rotation de la broche (2), et par
- des moyens (11) de mesure de positionnement reliés à des moyens de programmation destinés à centrer l'axe (C) de l'ébauche ou de l'électrode-outil (4) et commander avec la précision désirée les mouvements de la tête d'usinage (1) appropriés à l'usinage ou la rectification de l'ébauche ou de l'électrode-outil (4) selon un profil prédéterminé.

2. Dispositif selon la revendication 1, comportant aussi un magasin (60) muni d'un chargeur approprié, agencé pour présenter une ébauche ou une électrode-outil (4) en l'orientant de manière à ce qu'elle soit saisie automatiquement par le porte-électrode (3).

3. Dispositif selon la revendication 1, comportant un organe de commande numérique programmé de manière appropriée pour mémoriser la position de la surface active de l'électrode-outil (4) avant de la rafraîchir ou de la remplacer et pour coordonner les mouvements de la tête d'usinage (1) et/ou de l'outil auxiliaire (6) afin de ramener cette surface après rafraîchissement à cette même position ou afin d'amener la surface active d'une nouvelle électrode-outil (4) à cette même position.

4. Dispositif selon la revendication 1, comportant un système de commande automatique des mouvements relatifs de la tête d'usinage (1) et de l'outil auxiliaire (6) afin que celui-ci usine ou rafraîchisse avec précision le profil actif de l'ébauche ou de l'électrode-outil (4) selon une géométrie prédéterminée.

5. Dispositif selon la revendication 1, dans lequel l'extrémité du porte-outil (3) est constituée par une pince (27) dont les griffes (35) sont agencées pour s'engager dans une ou plusieurs empreintes (36) ménagées sur l'ébauche (4) qui peut être une ébauche-standard ou sur l'électrode-outil (4) qui peut être normalisée.

6. Dispositif selon la revendication 1, dans lequel les moyens de fixation du porte-électrode (3) sont agencés pour fixer l'électrode outil ou l'ébauche (4) par simple pression.

7. Dispositif selon la revendication 1, dans lequel l'outil auxiliaire (6) comporte plusieurs couteaux disposés symétriquement autour d'un axe parallèle à celui de l'électrode-outil ou de l'ébauche (4), par example un couteau à profil constant (50, 51, 52).

8. Dispositif selon la revendication 1, dans lequel le porte-électrode (3) comporte un appui amovible (45) agencé pour maintenir l'électrode-outil ou l'ébauche (4) lors du tournage de celle-ci par l'outil auxiliaire (6) et fixé sur la tête d'usinage (1) pour rester immobile lors de la rotation de la broche tournante (2).

9. Dispositif selon la revendication 1, dans lequel l'outil auxiliaire (6) est monté à l'intérieur d'une enceinte (54) retenant un liquide d'usinage (55).

10. Dispositif selon la revendication 1, dans lequel l'outil auxiliaire (6) est monté sur un support (60) muni d'une pièce isolante (62) apte à guider et maintenir l'électrode-outil ou l'ébauche (4) lors de son tournage par cet outil-auxiliaire.

11. Dispositif selon la revendication 1, dans lequel l'outil auxiliaire (6) est monté dans un circuit à touche électrique.

12. Dispositif selon la revendication 11, dans lequel ce circuit émet un signal vers la commande numérique de la machine EDM programmée de manière appropriée afin d'arrêter, dès réception de ce signal, le mouvement de la tête d'usinage (1), de repérer la position de l'ébauche ou de l'électrode (4), de verrouiller la touche électrique et d'enclencher le programme correspondant au tournage de l'ébauche ou du rafraîchissement de l'électrode.

13. Ebauche standard constituée par un volume de révolution et munie d'une ou plusieurs empreintes (36), situées dans un plan perpendiculaire à son axe de symétrie et destinées à coopérer avec des griffes (35) prévues sur le porte-électrode (3).

14. Ebauche standard selon la revendication 13, dans laquelle ces empreintes (36) sont constituées par une rainure circulaire (36) .

15. Ebauche selon la revendication 14, dont la rainure (36) a un profil qui permet l'autocentrage de l'ébauche (4) sur le porte-électrode (3).

16. Electrode-outil normalisée constituée par un volume de révolution et munie d'une ou plusieurs empreintes (36), situées dans un plan perpendiculaire à son axe de symétrie et destinées à coopérer avec des griffes (35) prévues sur le porte-électrode (3).

17. Electrode-outil normalisée selon la revendication 16, dans laquelle ces empreintes (36) sont constituées par une rainure circulaire (36).

18. Electrode-outil selon la revendication 17, dont la rainure (36) a un profil qui permet son autocentrage sur le porte-électrode (3).

## Claims

1. Device for EDM machine for routing and milling intended for turning and/or sharpening an electrode-tool (4) without having to release the machining head of the EDM machine and comprising
- an electrode-holder mounted on the machining head (1) of the EDM machine and capable of supporting this electrode-tool or its blank both during its turning and/or its alignment and during machining by electro-erosion and
- a single work tank (20) in which are mounted the workpiece (7) and an auxiliary tool (6) arranged for machining an electrode-tool (4) and/or sharpening with precision its working profile in the form of a volume generated by the revolution of an arbitrary curve, characterised by
- the fact that the machining head (1) is vertically mobile and carries a rotating spindle (2) on which is fixed the electrode-holder (3), that
- the auxiliary tool (6) is in the form of a single mechanical tool mobile in a plane perpendicular to the rotational axis of the spindle (2) or in the form of a block of several tools placed symmetrically around the rotational axis of the spindle (2), and by
- measuring means (11) for the positioning coupled to programming means provided for centring the axis (C) Of the blank or of the electrode-tool (4) and controlling with the desired precision the movements of the machining head (1) appropriate to the machining or the alignment of the blank or the electrode-tool (4) in accordance with a predetermined profile.

2. Device according to claim 1, comprising also a magazine (60) provided with a suitable charger, arranged to present a blank or an electrode-tool (4) by orientating it in such a way that it is automatically grasped by the electrode-holder (3).

3. Device according to claim 1, comprising a numerical control means programmed in a manner appropriate for memorizing the position of the working surface of the electrode-tool (4) before sharpening it or replacing it and for co-ordinating the movements of the machining head (1) and/or the auxiliary tool (6) in order to bring back this surface after sharpening to the same position or in order to bring the working surface of a new electrode-tool (4) to this same position.

4. Device according to claim 1, comprising an automatic control system for the relative movements of the machining head (1) and the auxiliary tool (6) in order that the auxiliary tool machines or sharpens with precision the active profile of the blank or the electrode-tool (4) according to a predetermined geometry.

5. Device according to claim 1, in which the end of the tool-holder (3) is made up of a clamp (27) whose fingers are arranged to engage into one or more impressions made on the blank (4) which can be a standard blank or on the electrode-tool (4) which can be standardised.

6. Device according to claim 1, in which the fixing means of the electrode-holder (3) are arranged to secure the electrode-tool or the blank (4) by simple pressure.

7. Device according to claim 1, in which the auxiliary tool (6) has several knives arranged symmetrically around an axis parallel to that of the electrode-tool or the blank (4), for example a knife with constant profile (50, 51, 52).

8. Device according to claim 1, in which the electrode-holder (3) has a detachable support (45) arranged to support the electrode-tool or the blank (4) during turning of the same by the auxiliary tool (6) and fixed on the machining head (1) so as to remain motionless during the rotation of the turning spindle (2).

9. Device according to claim 1, in which the auxiliary tool (6) is mounted in a housing containing a machining liquid (55).

10. Device according to claim 1, in which the auxiliary tool (6) is mounted on a support (60) provided with an insulating part (62) capable of guiding and supporting the electrode-tool or the blank (4) during its turning by this auxiliary tool.

11. Device according to claim 1, in which the auxiliary tool (6) is mounted in an electric contact circuit.

12. Device according to claim 11, in which this circuit emits a signal to the numerical control of the EDM machine programmed in a manner appropriate in order to stop, when receiving this signal, the movement of the machining head (1), to locate the position of the blank or the electrode (4), to lock the electric contact and to engage the program corresponding to the turning of the blank or the sharpening of the electrode.

13. Standard blank made up of a volume of revolution and furnished with one or more impressions (36), situated in a plane perpendicular to its axis of symmetry and intended to co-operate with fingers (35) provided on the electrode-holder (3).

14. Standard blank according to claim 13, in which these impressions are made up of a circular groove (36).

15. Blank according to claim 14, in which the groove (36) has a profile which allows automatic centring of the blank (4) on the electrode-holder (3).

16. Standardised electrode-tool made up of a volume of revolution and provided with one or more impressions situated in a plane perpendicular to its axis of symmetry and intended to cooperate with fingers (35) provided on the electrode-holder (3).

17. Standardised electrode-tool according to claim 16, in which these impressions are made up of a circular groove.

18. Electrode-tool according to claim 17, in which the groove (36) has a profile which allows automatic centring on the electrode-holder (3).

## Patentansprüche

1. Vorrichtung für eine Senk- und Fräs-EDM-Maschine, bestimmt zum Drehen und/oder Überholen einer Werkzeugelektrode (4), ohne den Bearbeitungskopf der EDM-Maschine entriegelt zu haben, und umfassend
- einen Elektrodenträger (3), der am Bearbeitungskopf (1) der EDM-Maschine montiert und in der Lage ist, diese Werkzeugelektrode oder ihren Rohling (4) während ihrer Drehung und/oder ihrer Überholung als auch während der Bearbeitung mit der Werkzeugelektrode zu halten, und
- einen einzigen Arbeitsbehälter (20), in dem das zu bearbeitende Werkstück (7) und ein Hilfswerkzeug (6) montiert sind, das angetrieben ist, um eine Werkzeugelektrode (4) mit Präzision ihr aktives Körperformprofil erzeugt durch die Drehung irgendeiner Kurve zu bearbeiten oder/und zu überholen, gekennzeichnet durch
- die Tatsache, daß der Bearbeitungskopf (1) vertikal beweglich ist und eine drehbare Spindel (2) trägt, an der der Elektrodenträger (3) befestigt ist, daß
- das Hilfswerkzeug (6) in Form eines einzigen mechanischen Werkzeugs, beweglich in einer Ebene senkrecht zur Drehachse der Spindel (2), oder eines mehrere Werkzeuge umfassenden Blocks realisiert ist, die symmetrisch um die Drehachse der Spindel (2) angeordnet sind, und durch
- Mittel (11) zum Messen der Positionierung, die mit Mitteln zur Programmierung, bestimmt zum Zentrieren der Achse (C) des Rohlings oder der Werkzeugelektrode (4) und zum Steuern der Bewegungen des Bearbeitungskopfs (1) mit der gewünschten Präzision, geeignet zur Bearbeitung oder der Formgebung des Rohlings oder der Werkzeugelektrode (4) entsprechend einem vorbestimmten Profil, verbunden sind.

2. Vorrichtung nach Anspruch 1, umfassend auch ein Magazin (60), enthaltend einen geeigneten Lader, eingerichtet zum Präsentieren eines Rohlings oder einer Werkzeugelektrode (4), indem diese(r) derart orientiert wird, daß sie automatisch durch den Elektrodenträger (3) ergreifbar ist.

3. Vorrichtung nach Anspruch 1, umfassend ein Organ zur numerisches Steuerung, derart programmiert, das es zum Speichern der Position der aktiven Oberfläche der Werkzeugelektrode (4) vor ihrem Überholen oder ihrem Ersetzen und zum Koordinieren der Bewegungen des Bearbeitungskopfes (1) und/oder des Hilfswerkzeugs (6) geeignet ist, um diese Oberfläche nach der Überholung in diese gleiche Position zurückzubringen oder um die aktive Oberfläche einer neuen Werkzeugelektrode (4) in die gleiche Position zu bringen.

4. Vorrichtung nach Anspruch 1, umfassend ein System zum-automatischen Steuern von Relativbewegungen des Bearbeitungskopfes (1) und des Hilfswerkzeugs (6), um mit diesem mit Präzision das aktive Profil des Rohlings oder der Werkzeugelektrode (4) gemäß einer vorbestimmten Geometrie zu bearbeiten oder zu überholen.

5. Vorrichtung nach Anspruch 1, bei der das Ende des Werkzeugträgers (3) durch einen Greifer (27) gebildet wird, dessen Klauen (35) ausgebildet sind, um mit einer oder mehreren Vertiefungen (36), die im Rohling (4), bei dem es sich um einen Standardrohling handeln kann, oder an der Werkzeugelektrode (4), die genormt sein kann, angebracht sind, in Eingriff zu gelangen.

6. Vorrichtung nach Anspruch 1, bei der die Mittel zum Befestigen des Elektrodenträgers (3) zum Befestigen der Werkzeugelektrode oder des Rohlings (4) durch einfachen Druck ausgebildet sind.

7. Vorrichtung nach Anspruch 1, bei der das Hilfswerkzeug (6) mehrere Messer umfaßt, die symmetrisch um eine Achse parallel zu der der Werkzeugelektrode oder des Rohlings (4) angeordnet sind, beispielsweise ein Messer mit konstantem Profil (50, 51, 51).

8. Vorrichtung nach Anspruch 1, bei der der Elektrodenträger (3) einen abnehmbaren Anschlag (45) umfaßt, der zum Halten der Werkzeugelektrode oder des Rohlings (4) während deren Drehung durch das Hilfswerkzeug (6) ausgebildet und am Bearbeitungskopf (1) befestigt ist, um während der Drehung der sich drehenden Spindel (2) unbeweglich zu bleiben.

9. Vorrichtung nach Anspruch 1, bei der das Hilfswerkzeug (6) im Inneren einer Arbeitsflüssigkeit (55) enthaltenden Einfassung (54) montiert ist.

10. Vorrichtung nach Anspruch 1, bei der das Hilfswerkzeug (6) auf einem Träger (60) montiert ist, der mit einem Isolierstück (62) versehen ist, das dazu geeignet ist, die Werkzeugelektrode oder den Rohling (4) während ihrer Drehung durch dieses Hilfswerkzeug zu führen und zu halten.

11. Vorrichtung nach Anspruch 1, bei der das Hilfswerkzeug (6) in einem elektrischen Tastkreis montiert ist.

12. Vorrichtung nach Anspruch 11, bei der dieser Kreis ein Signal an die numerische Steuerung der EDM-Maschine abgibt, die programmiert ist, um bei Empfang dieses Signals die Bewegung des Bearbeitungskopfes (1) anzuhalten, die Position des Rohlings oder der Werkzeugelektrode (4) zu lokalisieren, die elektrische Taste zu verriegeln und das Programm korrespondierend zur Drehung des Rohlings oder zum überarbeiten der Elektrode einzuschalten.

13. Standardrohling, gebildet aus einem Drehkörper und versehen mit einer oder mehreren, in einer Ebene senkrecht zu seiner Symmetrieachse angeordneten, zum Zusammenarbeiten mit an dem Elektrodenträger (3) vorgesehenen Klauen (35) bestimmten Vertiefungen (36).

14. Standardrohling nach Anspruch 13, bei dem diese Vertiefungen (36) durch eine ringförmige Nut (36) gebildet sind.

15. Rohling nach Anspruch 14, dessen Nut (36) ein Profil aufweist, das die Selbstzentrierung des Rohlings (4) an dem Elektrodenträger (3) erlaubt.

16. Normierte Werkzeugelektrode, gebildet durch einen Drehkörper und versehen mit einer oder mehreren, in einer Ebene senkrecht zu seiner Symmetrieachse angeordneten, zum Zusammenarbeiten mit an dem Elektrodenträger (3) vorgesehenen Klauen (35) bestimmten Vertiefungen (36).

17. Normierte Werkzeugelektrode nach Anspruch 16, bei der diese Vertiefungen (36) durch eine ringförmige Nut (36) gebildet sind.

18. Normierte Werkzeugelektrode nach Anspruch 17, deren Nut (36) ein Profil aufweist, das die Selbstzentrierung des Rohlings (4) an dem Elektrodenträger (3) erlaubt.
